# EUROPEAN PATENT APPLICATION

(11) **EP 4 723 019 A1**
(43) Date of publication of application: **08.04.2026**
(21) Application number: 24204074.9
(22) Date of filing: 01.10.2024
(51) Int. Cl.: G06Q 40/00, G06F 40/205

(54) **EXTRACTION OF STRUCTURED DATA**

(71) Applicant: Mastercard International Incorporated, Purchase, NY 10577 (US)
(72) Inventor: PANTON, Christian, Albertslund (DK); CHRISTENSEN, Michael, Viby Sjælland (DK)
(74) Representative: Murgitroyd & Company

(57) **Abstract**

A system for extracting structured data comprises a processor and a memory, wherein the processor processes documents from a provider, using a domain specific grammar structure for the provider and uses rules data based on the grammar structure for the processing and decomposition of a target data provided by the provider. The processing and decomposition of the target data extracts selected information from the target data on the basis of the rules, generates a results data for further processing and/or analysis. A corresponding method of structured data extraction is also disclosed.

## Description

### FIELD OF THE DISCLOSRE

The present disclosure relates to a method and system for the extraction of structured data. More particularly, but not exclusively, the present disclosure relates to a method and system for the extraction of structured data from transactional data. Even more particularly, but not exclusively, the present disclosure relates to a method and system for the extraction of structured data from transactional data, for example, in open banking.

### BACKGROUND

The extraction of structured data involves transforming unstructured or partially structured data into structured data for further processing and analysis. Examples of unstructured and partially structured data include, but are not limited to, web pages, emails, documents and transactional data, for example for use in Open Banking applications.

Open Banking allows third-party service providers to access and analyse consumer banking and financial data from financial institutions through application programming interfaces, APIs, with the consumers permission. In order to facilitate open banking services financial institutions allow access to the transaction ledger of a consumer to a third party, with the consumer's permission, such that the third party can extract the consumer's transaction data and process to provide services to the consumer, for example analysis of spending habits or credit risk scoring. However, the service provider receiving the data has no transparency of the process used to generate the data or the data's history or provenance.

The transaction ledger typically contains not only a monetary amount associated with a transaction but also typically contains, by way of non-limiting examples, transaction date, whether the amount was received or spent and a descriptor (memo) identifying the transaction. The textual content of the transaction ledger is often constructed from information from multiple sources, such as, by way of non-limiting example, the consumer's financial institution, the merchant, the merchant's financial institution, and artefacts from various systems within the financial institution.

Usually, the financial institution uses a textual descriptor to provide context around individual transactions within a transaction ledger and about the customer's account ledger itself. For example, a transaction descriptor "MC PAYPAL" could refer to a payment from a Mastercard payment device via PayPal and a transaction descriptor "FPS INV/2024/2029" may refer to payment of invoice number 2029 of 2024 via a wire transfer, FPS being a prefix used by a given financial institution to denote a wire transfer.

Current approaches to extracting structured data from transaction descriptors employ "stop words", which are words excluded from analysis, to filter out unwanted textual elements, so called "noise" text. Users are not prevented from using "stop words", rather the words are ignored when parsing the text. For example, in the above examples, "MC" may be identified as a stop word associated with a card payment, "PayPal" as a prefix added by a third party during card processing, "FPS" as a wire transfer and "INV" a common abbreviation used to identify an invoice. However, where a different semantic constellation such as, "FPS MC Service and Repair" actually refers to Frank P Smith (FPS) motorcycle (MC) service and repairs the terms FPS and MC are ignored as stop words. Furthermore, using stop words results in no additional features about the transaction being extracted in relation to stop words, where for instance the fact that a payment is card based (MC) could lead to a valuable insight. Thus, there is a loss of richness of data and available insights from data analysis when using stop words, which leads to a lower accuracy in data extraction, and a loss of available insights from the extracted data due to data suppression.

Additionally, many financial institutions have limits on field lengths within transaction ledgers which results in the truncation of descriptors and if a transaction ledger is a concatenation of determinative process of transactions the field length is determined by the institution having the shortest field length for a given field, see for example https://www.bankofapis.com/faq.

The use of artificial intelligence (AI) in Open Banking is known, for example, the use of natural language processing (NLP) in extracting transaction recipients, see for example, https://developer.mastercard.com/blog/ai-in-ob-overview/, https://personable.com/top-bank-statement-extraction-software/ and JP2012185672. However, this still suffers from the issue of truncation of field data and stop words resulting in confusion or potentially useful data being ignored, as do character matching method which are syntax insensitive, see for example US 8,219,550.

Not losing the richness of data associated with current techniques allows for improved accuracy of data processing and provides for the use of the extracted structured data in more applications due to its improved richness.

### SUMMARY OF THE DISCLOSURE

According to a first aspect of the present disclosure there is provided a computer implemented method of extraction of structured data comprising:
retrieving rules data associated with a grammar corresponding to at least one instance specific syntax associated with an entry in a target data;
storing the rules data in a memory;
parsing the target data at a processor using the rules data;
extracting data corresponding to an element identified in the grammar from the target data to a result data, by the processor; and
provide the result data to the, or another processor, for further processing.

The method may comprise providing multiple rules associated with a common grammar of a source of target data.

The rules data may define a meaning to a specific text string associated with the position of the specific text string in the entry in the target data. The rules data may define a meaning to a specific text string associated with a specific field in the entry in the target data.

The method may comprise identifying field lengths in the rules data. The method may comprise determining if a field in the target data may be truncated relative to a full text string using an identified field length.

The method may comprise extracting one or more tokens from the target data to the result data, wherein each token comprises information relating to a transaction defined in an entry in the target data.

The target data may comprise a transaction ledger. The transaction ledger may comprise a financial transaction ledger.

The at least one entry in the target data may comprise a text string.

The rules data may apply to target data from a specific data provider.

The method may comprise generating the rules data from the grammar.

According to a second aspect of the present disclosure there is provided a structured data extraction system comprising:
a memory;
a processor operatively connected to the memory;
the memory storing instructions which when executed on the processor cause the processor to:
   retrieve rules data associated with a grammar corresponding to at least one instance specific syntax associated with an entry in a target data;
   storing the rules data in a memory;
   access the rules data to parse the target data using the rules data;
   extract data corresponding to an element identified in the rules data from the target data to result data, by the processor; and
   provide the result data to another processor, for further processing or process the data further.

The memory may store multiple sets of rules data associated with a common grammar of a source of target data. The processor, when executing the instructions, accesses one or more of the multiple sets of rules data when parsing the target data.

The rules data may define a meaning to a specific text string associated with the position of the specific text string in the entry in the target data. The rules data may define a meaning to a specific text string associated with a specific field in the entry in the target data.

The rules data may identify field lengths. The processor, when executing the instructions, determines if a field in the target data is truncated relative to a full text string using an identified field length.

The processor, when executing the instructions, extracts one or more tokens from the target data to the result data, wherein each token comprises information relating to a transaction defined in an entry in the target data.

The target data may comprise a transaction ledger. The transaction ledger may comprise a financial transaction ledger.

The at least one entry in the target data may comprise a text string.

The rules data may apply to target data from a specific data provider.

The processor may be arranged to generate the rules data from the grammar.

According to a third aspect of the present disclosure there is provided a non-transitory computer readable medium having instructions stored thereon which, when executed by a processing device, cause the processing device to:
retrieve rules data associated with a grammar corresponding to at least one instance specific syntax associated with an entry in a target data;
storing the rules data in a memory;
access the rules data to parse the target data using the rules data;
extract data corresponding to an element identified in the grammar rules from the target data to result data, by the processor; and
provide the result data to another processor, for further processing or process the data further.

The memory may store multiple sets of rules data associated with a common grammar of a source of target data. The instructions, when executed, may cause the processor to access one or more of the multiple sets of rules data when parsing the target data.

The rules data may define a meaning to a specific text string associated with the position of the specific text string in the entry in the target data. The rules data may define a meaning to a specific text string associated with a specific field in the entry in the target data.

The rules data may identify field lengths. The instructions, when executed, may cause the processor to determine if a field in the target data is truncated relative to a full text string using an identified field length.

The instructions, when executed, may cause the processor to extract one or more tokens from the target data to the result data, wherein each token comprises information relating to a transaction defined in an entry in the target data.

The target data may comprise a transaction ledger. The transaction ledger may comprise a financial transaction ledger.

The rules data may apply to target data from a specific data provider.

The instructions, when executed, may cause the processor to generate the rules data from the grammar.

The at least one entry in the target data may comprise a text string.

### BRIEF DESCRIPTION OF THE DRAWINGS

The disclosure will now be described, by way of example only, with reference to the accompanying drawings in which:
Figure 1 is a schematic diagram of a system for extraction of structured data according to the present disclosure;
Figure 2 is schematic diagram of a parsing of a target data using grammar in accordance with the present disclosure; and
Figure 3 is a flow chart showing a computer implemented method of extraction of structured data according to the present disclosure.

### DETAILED DESCRIPTION OF EXEMPLARY EMBODIMENTS

The following description is exemplary only and is not intended to limit the scope of the accompanying claims to the embodiments described herein.

It will be appreciated that the term "grammar" as used herein refers to classes of data fields entries, truncation of data field, their function and interrelationships in target data. By way of non-limiting example, grammar refers to the formal description of which elements and compositions thereof that qualify as valid texts for a given financial institution's transaction ledger. The different elements in the grammar allow us to identify different functions within the texts, according to their location, content, and context thus a grammar can therefore define classes of data fields and their function, possible content and special properties, such as, by way of non-limiting example, how they can be truncated. In an exemplar, the grammar may be defined in a custom way, a so-called domain specific language that fits the use-case and domain perfectly.

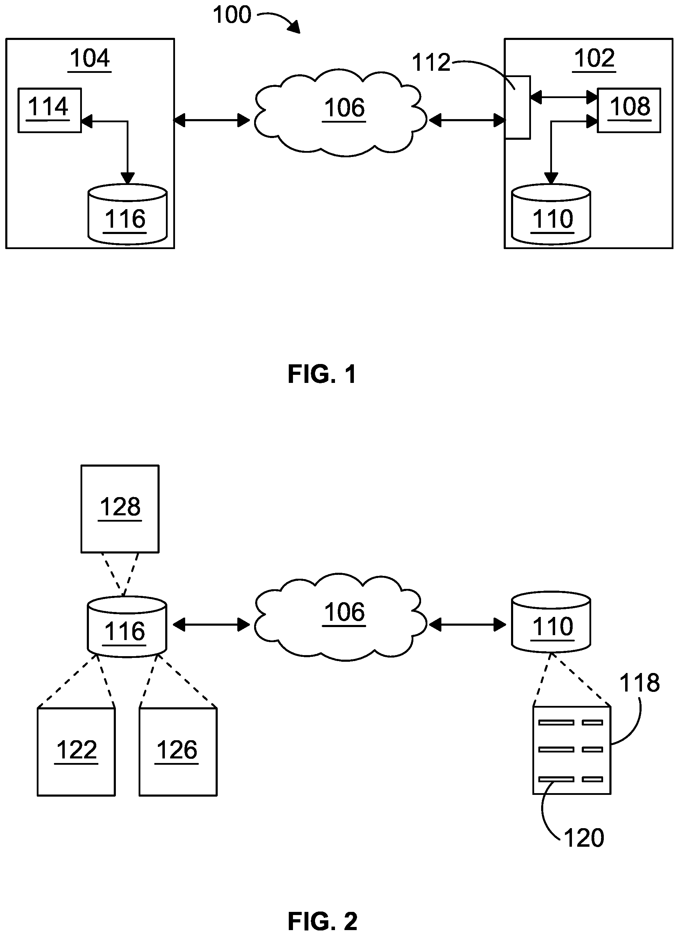

Referring now to Figures 1 and 2, A system for structured data extraction (100) comprises a target server (102), by way of non-limiting example operated by a financial institution and an application server (104), by way of non-limiting example operated by a service provider who provides ancillary, or value add services based upon the data stored on the target server (102). The target server (102) and the application server (104) are connected by a network (106), typically but not necessarily the Internet, although it will be appreciated that a private network may be used to enhance data security.

The target server (102) comprises a processor (108) and a data storage medium (110), the processor (108) is operatively connected to the data storage medium (110) such that data can flow between them. The processor (108) exposes an application programming interface (API) (112) such that data stored on the data storage medium (110) can be accessed via the network (106) by a device, by way of non-limiting example the application server (104) that uses the correct API calls and the correct security protocols. It will be appreciated that, the system (100) may comprise a plurality of servers and/or processors that each change the resulting text in different ways, by way of non-limiting example in the case of financial transatino data, one system may add a reference number, another system may add a currency conversion rate, another system may truncate the merchant name because it doesn't fit into a prescribed length of data field. Thus, this is an accumulative process through which the original description of, for example, a financial transaction is transformed.

The application server (104) comprises a processor (114) and a data storage medium (116), the processor (114) is operatively connected to the data storage medium (116) such that data can flow between them.

In use, the target server (102) has target data (118) stored upon its data storage medium (110), by way of non-limiting example, the target data (118) is unstructured. In one, non-limiting example, embodiment the target data (118) is a transaction ledger which details financial transactions associated with one or more users, typically but not necessarily, account holders with the financial institution responsible for the server (102). In the case of a transaction ledger the data (118) will comprise details of spending or receipt of monies in the form a text string (120). The text string is typically a composite of information received from a number of sources involved in a transaction detailed in a respective ledger entry. By way of non-limiting example, a purchase transaction entry in the ledger may comprise fields holding details of a merchant name, from the merchant, a transaction mechanism, such a wire transfer or credit card, a payment service provider who facilitated the transaction, such as PayPal or Klarna, additionally there may be free text fields where additional descriptive information relating to the transaction is detailed, by way of non-limiting example, details of the work or service provided.

As the software systems that generate the entries in a given financial institution's transaction ledger are deterministic each financial institution's transaction ledger will have a particular internal form to the data entries, referred to hereinafter as a grammar.

A non-limiting example of a grammar for a data entry in a transaction ledger is that all Mastercard card payment transactions would have a transaction ledger entry with a text string grammar such as {match :transaction_text, [static "MC"][value merchant name]}, thus allowing all Mastercard card payment transactions to be extracted. In another non-limiting example a PayPal transaction may comprise a text string grammar such as {match: merchant_name, [static "PAYPAL"][value mechant name] irrespective of whether the transaction was effected via any card payment scheme, instant payment scheme or wire transfer.

Additionally, a financial institution may limit the amount of characters that can be stored in a text string of the ledger, additionally or alternatively, intermediate systems, such as, by way of non-limiting example, those of a merchant or a payment service provider may limit the length of the text string. An example of this is that for where there is a limit of 18 characters specified by a financial institution the final text string can vary dependent upon the routing and restrictions place on the text by intermediate systems. By way of non-limiting example, a transaction from a merchant "Freddy's Frozen Yoghurt" may be represented in the final transaction ledger as various text strings, such as "FREDDY'S FROZEN CU", 2MC FREEDY'S FROZEN" or "MC PAYPAL "FREDDY"" dependent upon the routing of the payment transaction through the wider payment infrastructure. It will be appreciated that a limit of 18 characters in only exemplary and a given financial institution may place any limit on the length of the text string for an entry in a transaction ledger.

A machine learning model, such as a classification model, can be used to classify data entries in the data (118) such that a rules data structure (122) can be constructed to reflect the structure and grammar of data entries in a given financial institutions transaction ledger. Alternatively, or additionally, natural language processing may be used to analyse instruction or manual data files which define structures within the transaction data ledger to construct the rules data structure (122) and/or provide additional richness to the information contained within the grammar. Further additionally, or alternatively, the grammar may be constructed from user input at a terminal (not shown).

The service provider may construct the rules data structure (122) by means of training a machine learning model from data sets received from the target server (102). Alternatively, an analyst may extract a grammar from a plurality of data sets, for example transaction texts, which may have been previously validated and the rules data (122) created therefrom.

For any given financial institution the grammars associated with defined structures of text strings are combined to define rule data (122). By way of non-limiting example, in respect of the preceding merchant name grammars the rule set for extracting a relevant token, in this case the merchant name the combined rule set is defined as:
{match: transaction_text, [value, transaction_text, max: 18]}
{match: transaction_text, [static "MC", tags: card][value merchant_name]}
{match: transaction_text, [static "PAYPAL", tags: psp, online][ value merchant_name]}

In the present embodiment the rules data (122) is shown residing on the data storage medium (116) of the application server (104), although it will be appreciated that in an alternative embodiment the rules data (122) may reside at the target server (102) and be accessed by the application server (104) via the API (112).

The processor (114) of the application server (104) accesses the target data (118) from the target server (102) via the API (112) either serially with each transaction ledger entry for a customer being accessed individually or by downloading a transaction ledger and storing it on the data storage medium (116).

The processor (114) accesses the rules data (122) and iteratively applies each element of the rules data (122) to a text string entry of the transaction ledger. In at least one exemplary embodiment, the rules data (122) is applied to the transaction ledger by means of a Recursive Descent Parser that takes an input text string and applies the rules of the grammar to the test string. It will be appreciated that rules can refer to other rules, which means that resolving one rule on a match in the text can result in the resolution of another, or the same rule again, on the text string.

By way of non-limiting example, for the transaction text string, ""MC PAYPAL "FREDDY"", the token extraction proceeds as follows:
transaction_text=MC PAYPAL FREDDY, max:18

The MC text identifying the transaction as a card transaction, and a corresponding tag being generated, the three characters associated with this text are removed from the maximum field length for the next iteration:
marchant_name=PAYPAL FREDDY, max: 15, tags: card

The PAYPAL text identifying the transaction as an online, payment service provider facilitated transaction, and a corresponding tag being generated, the eight characters associated with this text are removed from the maximum field length for the next iteration:
merchant_name=FREDDY, max:7, tags: card, psp, online

Thus, in the present example, by applying the rules data set (122) defined by the grammar of the financial institution the target data is processed and decomposed and the merchant name is identified along with a transaction pathway which provides useful information for further processing and analysis of the data.

Once the rules data (122) has been applied to the target data (118) results data (126) is generated comprising the enhanced data entries for each corresponding text string entry target data (118). In the present embodiment the result data (126) comprises entries of form, by way of nonlimiting example:
merchant_name=FREDDY, max:7, tags: card, psp, online, card=Mastercard,
PSP=PayPal .

Although it will be appreciated that any suitable rule can be applied to identify and extract any particular token as required.

It will be appreciated that the result data (128) can be accessed and used by the processor (114) or another processor to provide additional services based upon the analysis of the enhanced results data for example, credit scoring or to provide enriched data for subsequent machine learning models when compared to the plain text strings of the transaction ledger target data (118).

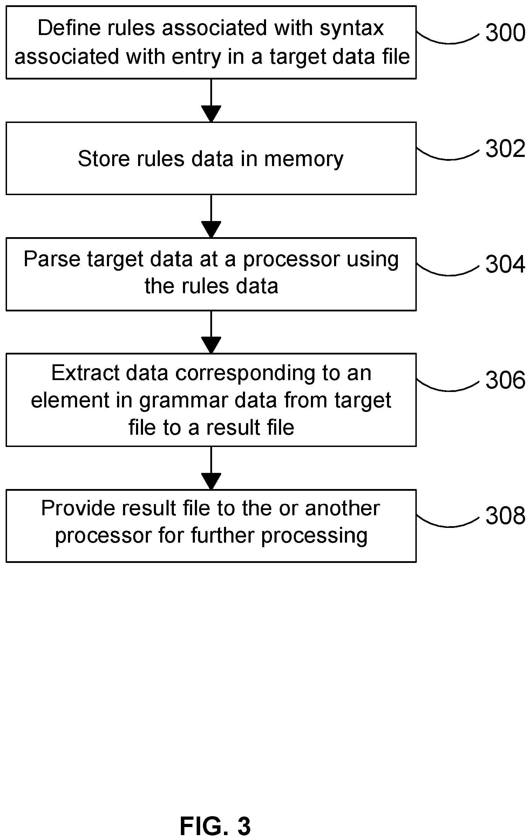

Referring now to Figure 3, a computer implemented method of extraction of structured data comprises defining rules data associated with grammar corresponding to at least one instance specific syntax associated with an entry in a target data (Step 300). The rules data is stored in a memory (Step 302). The target data is parsed at a processor using the rules data (Step 304). Data corresponding to an element identified in the grammar is extracted from the target data to result data, by the processor (Step 306). The result data is provided to the, or another processor, for further processing (Step 308).

It will be appreciated that although described with reference to a financial ledger information the present invention is more broadly applicable to scenarios where one or more automated processes are used to encode information through text where a specific pattern or structure is used, and where there can be a variation based on input or output sources, data providers and the like. The text may comprise natural language components in combination with machine generated structure of content to provide structured information through text.

Non-limiting examples of scenarios where the present invention is applicable include, account ownership identification with financial institution (within and outside an Open Banking context). general ownership identification where complex and partial ownership will be encoded in a text string including legal entity names. cashier receipts: In particular line item analysis of items on a receipt, invoices (in particular line item analysis), emails based on templates with a high degree of automated and semi-structured text, such as transactional emails, airline ticketing, transport manifests and NOTAM (Notice to Airmen): Information with an aviation authority to alert aircraft pilots of potential hazards which contain highly codified, condensed information which is interspersed with natural language comments.

It will be appreciated that although described with reference to processing and extraction of structured data from financial transaction ledger data the present invention is applicable to the extraction of structured data and/or the informational enrichment of data from any unstructured or partially structured data source where a grammar can be derived from deterministic operations. By way of non-limiting examples, the present invention can be used in obtaining structured data from unstructured sources such as emails, social media posts, unstructured document formats like DOCX, PDF, or TXT.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions that are resident at various times in various memory and storage devices in a computer and that, when read and executed by one or more processors in a computer, cause that computer to perform the operations embodying the various aspects of the embodiments of the invention. The computer readable program instructions for carrying out operations of the embodiments of the invention may be, for example, assembly language or either source code or object code is written in any combination of one or more programming languages.

The program code embodied in any of the applications/modules described herein is capable of being individually or collectively distributed as a program product in a variety of different forms. In particular, the program code may be distributed using the computer readable storage medium having the computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other robust state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions/acts specified in the flowcharts, sequence diagrams, and/or block diagrams. The computer program instructions may be provided to one or more processors of a general-purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more, or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context indicates otherwise. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the general inventive concept.

## Claims

1. A computer implemented method of extraction of structured data comprises:
retrieve rules data associated with a grammar corresponding to at least one instance specific syntax associated with an entry in a target data;
storing the rules data in a memory;
parsing the target data at a processor using the rules data;
extracting data corresponding to an element identified in the rules data from the target data to result data, by the processor; and
provide the result data to the, or another processor, for further processing.

2. The method of Claim 1 comprising providing the rules data comprising multiple rules associated with a common grammar of a source of target data.

3. The method of either Claim 1 or Claim 2 comprising identifying field lengths in the rules data and determining if a field in the target data is truncated relative to a full text string using an identified field length.

4. The method of any preceding claim comprising extracting one or more results from the target data to the result data, wherein each result comprises information relating to a transaction defined in an entry in the target data.

5. A structured data extraction system comprises:
a memory;
a processor operatively connected to the memory;
the memory storing instructions which when executed on the processor cause the processor to:
retrieve rules data associated with a grammar corresponding to at least one instance specific syntax associated with an entry in a target data;
storing the rules data in a memory;
access the rules data to parse the target data using the rules data;
extract data corresponding to an element identified in the rules data from the target data to result data, by the processor; and
provide the result data to another processor, for further processing or process the data further.

6. The system of Claim 8 wherein the memory stores rules data comprising multiple rules associated with a common grammar of a source of target data.

7. The system of either Claim 8 or Claim 9 wherein the rules data identifies field lengths and the processor, when executing the instructions, is determines if a field in the target data is truncated relative to a full text string using an identified field length.

8. The system of any one of Claims 8 to 10 wherein, the processor when executing the instructions, extracts one or more results from the target data to the result data, wherein each results comprises information relating to a transaction defined in an entry in the target data.

9. A non-transitory computer readable medium having instructions stored thereon which, when executed by a processing device, cause the processing device to execute the method of any one of Claims 1 to 4.

10. The method of any one of Claims 1 to 4, or the system of any one of Claims 5 to 8, or the non-transitory computer readable medium of Claim 9, wherein rules data may apply to target data from a specific data provider.

11. The method of any one of Claims 1 to 4 or Claim 10, or the system of any one of Claims 5 to 8 or Claim 10, or the non-transitory computer readable medium of Claim 9 or Claim 10, wherein the target data comprises a transaction ledger.

12. The method of any one of Claims 1 to 4 or Claims 10 or 11, or the system of any one of Claims 5 to 8 or Claims 10 or 11, or the non-transitory computer readable medium of Claim 9 to 11, wherein the at least one entry in the target data comprises a text string.

13. The method of any one of Claims 1 to 4 or Claims 10 to 12, or the system of any one of Claims 5 to 8 or Claims 10 to 12, or the non-transitory computer readable medium of Claim 9 to 12, wherein the rules data defines a meaning to a specific text string associated with the position of the specific text string in the entry in the target data.

14. The method of any one of Claims 1 to 4 or Claims 10 to 13, or the system of any one of Claims 5 to 8 or Claims 10 to 13, or the non-transitory computer readable medium of Claim 9 to 13, wherein the rules data defines a meaning to a specific text string associated with a specific field in the entry in the target data.
